(19) Europäisches Patentamt

European Patent Office

Office européen des brevets

(11) **EP 0 929 169 B1**

(12) **FASCICULE DE BREVET EUROPEEN**

(45) Date de publication et mention
de la délivrance du brevet:
**23.11.2005 Bulletin 2005/47**

(51) Int Cl.⁷: **H04L 9/00**

(21) Numéro de dépôt: **98403191.4**

(22) Date de dépôt: **17.12.1998**

(54) **Procédé de sécurisation de transmissions d'information réalisées par l'intermédiaire d'un réseau de télécommunications ouvert**

Verfahren zur Sicherendatenübermittlung in einem offenen Telekommunikationsnetzwerk

Process for a secure transmission of information by the use of an open telecommunications network

(84) Etats contractants désignés:
**AT DE ES GB IT SE**

(30) Priorité: **08.01.1998 FR 9800119**

(43) Date de publication de la demande:
**14.07.1999 Bulletin 1999/28**

(73) Titulaire: **ALCATEL**
**75008 Paris (FR)**

(72) Inventeurs:
  • **Papini, Hélène**
    **91400 Orsay (FR)**
  • **Simon, François**
    **91290 La Norville (FR)**

(74) Mandataire: **Lamoureux, Bernard et al**
**COMPAGNIE FINANCIERE ALCATEL**
**Département Propriété Industrielle**
**54, rue La Boétie**
**75008 Paris (FR)**

(56) Documents cités:
   **WO-A-93/11619        FR-A- 2 694 465**

• **TZONELIH HWANG ET AL: "SECRET
  ERROR-CORRECTING CODES (SECC)"
  ADVANCES IN CRYPTOLOGY, SANTA
  BARBARA, AUG. 21 - 25, 1988,1 janvier 1988,
  pages 540-563, XP000090661 GOLDWASSER S**

## Description

L'invention concerne un procédé de sécurisation de transmissions d'information réalisées par l'intermédiaire d'un réseau de télécommunications et notamment d'un réseau ouvert, tel qu'un réseau comportant des liaisons par voie radio Ce procédé est plus particulièrement destiné à être mis en oeuvre pour des transmissions d'information qui impliquent simultanément de par leur nature et/ou leur fonction une grande sûreté et une grande sécurité.

Il existe en effet de nombreuses applications où il est indispensable que les informations transmises correspondent fidèlement à celles qui ont été émises. Ceci est demandé, en particulier, dans de nombreux systèmes de sécurité où par exemple les informations de commande reçues doivent obligatoirement correspondre à celles qui ont été émises. Il est aussi couramment demandé que les transmissions soient réalisées en toute sécurité de manière que les destinataires puissent être assurés du fait que les informations, qu'ils reçoivent, proviennent, sans modification, des sources autorisées chargées de les émettre. Il est aussi souvent exigé que les informations soient traitées de manière à rester confidentielles et qu'elles ne puissent être exploitées que par leurs seuls destinataires réels

Une solution connue permet à une unité réceptrice de savoir si une information, qui lui a été transmise, est restée fidèle à l'information initiale ayant servi à l'émission. Elle implique la mise en oeuvre d'un code de détection d'erreur appliqué aux données d'information à transmettre, numériques ou numérisées, avant que ces données ne soient transmises. Les données constituant une information sont alors émises et donc transmises, accompagnées de données correspondantes de code d'erreur, par l'unité de communication qui les émet.

Il est alors possible à une unité de communication destinataire de vérifier une information reçue en exploitant les données de code d'erreur qui accompagnaient cette information.

Il est couramment prévu de transmettre des informations de manière systématiquement redondante à une unité destinataire pour lui permettre de réaliser une vérification d'intégrité par comparaison à la réception

Une solution connue, pour permettre à une unité réceptrice d'information de savoir si une information provient bien et sans modification d'une unité émettrice autorisée, implique un chiffrement par cette unité émettrice, à l'aide d'une première clé, des informations qu'elle émet à destination de l'unité réceptrice considérée. Un déchiffrement à l'aide d'une seconde clé de chaque information chiffrée reçue est alors effectué par l'unité réceptrice destinataire

Le chiffrement des informations transmises sous forme de données par une unité émettrice vers une ou éventuellement plusieurs unités réceptrices est une opération susceptible d'être définie par une formule telle que : $C_i = T(K_j M_l)$

où $C_i$ correspond à l'information chiffrée émise, où $K_j$ est la clé de chiffrement, où $M_l$ est l'information à chiffrer et où T est la fonction de chiffrement.

La ou les unités destinataires doivent effectuer un déchiffrement pour récupérer l'information qui leur est destinée. D'une manière générale, le déchiffrement est obtenu par une opération qui peut être définie par la formule $M = T^{-1}(K_l, C_i)$

où M correspond à l'information déchiffrée, où $K_l$ est la clé de déchiffrement et où $T^{-1}$ est la fonction de déchiffrement.

Comme il est connu, les clés $K_j$ et $K_l$ peuvent être choisies identiques de manière à permettre le chiffrement d'une information avant émission et son déchiffrement après réception par des opérations symétriques. Le choix de clés de chiffrement $K_j$ différentes pour différentes unités émettrices permet à chacune de ces dernières d'être identifiée de manière sûre par la ou les unités destinataires vers lesquelles elle envoie des informations chiffrées.

L'attribution d'une clé de déchiffrement $K_l$, privée, à une unique unité réceptrice présente un intérêt sur le plan sécuritaire, lorsqu'une ou plusieurs unités émettrices ayant à communiquer avec cette unité réceptrice disposent d'une même clé de chiffrement d'informations $K_j$, publique, permettant à chacune de ces unités émettrices de communiquer de manière confidentielle avec l'unité réceptrice. Pour éliminer au maximum les risques de réduction de la sécurité au cours du temps, il est couramment prévu des phases de négociation à des fins de choix et de changement des clés, les négociations impliquant les parties légitimement intéressées et éventuellement un superviseur, notamment après une phase déterminée d'exploitation des clés.

Ceci est notamment utile, lorsqu'il est prévu des ré-émissions d'information.

En effet, si de telles ré-émissions présentent des avantages sur le plan de la sûreté, il n'en est pas de même sur le plan de la sécurité dans la mesure où la répétition des informations augmente le risque de modification des informations en cours de transmission sous l'effet d'une cause extérieure, ainsi que le risque de violation de la confidentialité des informations par un tiers, lorsque cette confidentialité est demandée

Il est aussi connu d'utiliser des codes de correction d'erreur pour effectuer le chiffrement d'un message. Le document Hwang, T., SECRET ERROR-CORRECTING CODES (SECC), Lecture Notes in Computer Science, Advances in Cryptology - CRYPTO '88, p. 540-563, divulgue un procédé pour l'établissement d'une communication sécurisée entre des unités de communication déterminées par l'intermédiaire d'un canal d'un réseau de télécommunications, utilisant un code de correction d'erreur pour effectuer le chiffrement d'un message. Selon ce document, le code de correction d'erreur utilisé reste constant pendant la transmission. Contrairement à l'invention, le code de correction d'erreur exploité, selon ledit document, n'est pas sélectionné en application d'une loi de variation en fonction du temps.

L'invention a donc pour objet un procédé destiné à permettre de sécuriser des transmissions d'information réalisées par l'intermédiaire d'un réseau de télécommunications ouvert et à combiner les impératifs de sûreté et de sécurité évoqués ci-dessus

Le procédé est plus particulièrement destiné à permettre l'établissement d'une communication sécurisée entre des unités de communication par l'intermédiaire d'un canal d'un réseau de télécommunications.

Selon une caractéristique de l'invention, il est prévu de soumettre les données d'une information à transmettre, sélectivement, à partir d'une unité émettrice vers une ou plusieurs unités réceptrices déterminées, à un codage, avant émission, à l'aide d'un code de détection d'erreur destiné à permettre une récupération sûre de cette information à la réception; à des fins de sécurité, le code de détection d'erreur exploité pour le codage de cette information est crypté à l'aide d'une clé de chiffrement définie par application d'une loi de variation dépendant temps Selon une autre caractéristique de l'invention, il est alternativement prévu de soumettre les données d'une information à transmettre, sélectivement, à partir d'une unité émettrice vers une ou plusieurs unités réceptrices déterminées, à un codage, avant émission, à l'aide d'un code de détection d'erreur destiné à permettre une récupération sûre de cette information à la réception et de sélectionner le code de détection d'erreur exploité pour une transmission d'information en application d'une loi de variation dépendant du temps.

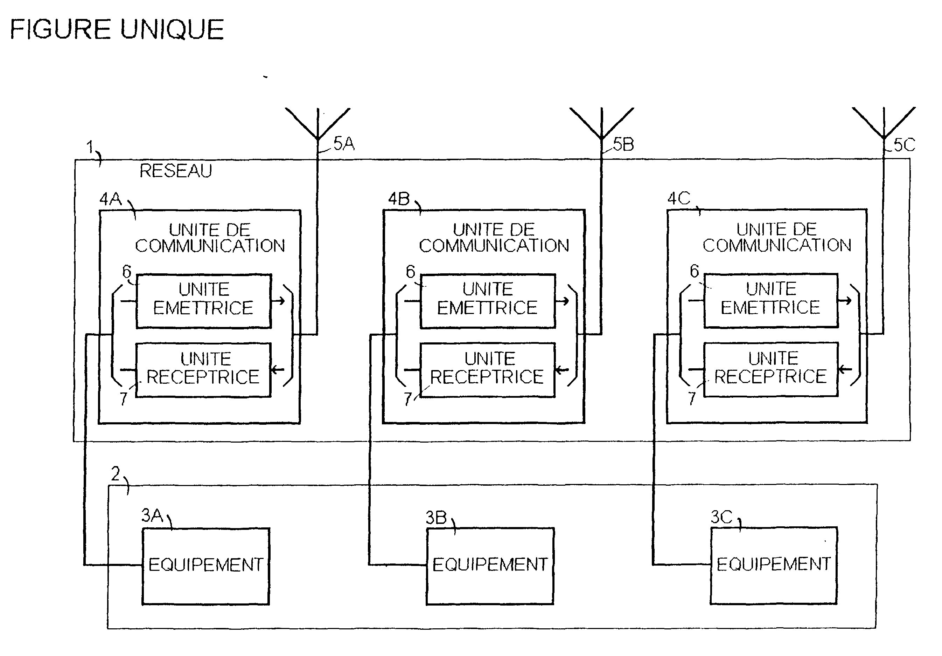

L'invention, ses caractéristiques et ses avantages sont précisés dans la description qui suit en liaison avec la figure unique évoquée ci-dessous.

La figure unique présente un schéma d'un ensemble associant un réseau de télécommunications 1 à un système 2 dont au moins certains des équipements 3, tels 3A, 3B, 3C, communiquent entre eux par l'intermédiaire d'unités de communication 4, telles 4A, 4B, 4C, participant au réseau 1. Dans l'exemple de réalisation envisagé, il est supposé que les transmissions d'information entre les unités de communication s'effectuent par voie radio comme le symbolisent les antennes 5A 5B, 5C, une communication s'effectuant par un canal de réseau donné entre deux unités.

Le système 2 est supposé comporter une pluralité d'équipements ayant à communiquer entre eux, seuls étant symbolisés ici les équipements dont les unités communiquent entre elles par voie radio, étant admis que ce mode de communication n'est pas nécessairement exclusif et qu'éventuellement d'autres équipements non représentés du système 2 sont susceptibles de communiquer par l'intermédiaire de liaisons par fils électriques ou fibres optiques.

Le système 2 est par exemple un réseau de signalisation ferroviaire exploité pour des communications entre des équipements divers qui sont ici supposés avoir accès à des unités de communication, telles que 4A, 4B, 4C du réseau de télécommunications 1 pour leurs communications

Les équipements du système 2 comportent par exemple des équipements d'infrastructure, fixes, ici symbolisés par l'équipement 3A et des équipements mobiles ici symbolisés par les équipements 3B et 3C, ces derniers étant par exemple individuellement incorporés dans les motrices exploitées pour tirer des wagons au long des voies du réseau ferroviaire qu'équipe le système 2

Les unités de communication présentées ici sont supposées comporter chacune une unité réceptrice radio 6 permettant de recevoir les informations et notamment les commandes et accusés de réception envoyés par voie radio à l'équipement desservi par cette unité réceptrice à partir d'une autre unité de communication. Elles sont aussi supposées comporter chacune une unité émettrice 7 qui permet à l'équipement desservi de transmettre par voie radio vers un ou plusieurs autres équipements du système, via les unités de communication respectives de ces équipements.

Selon l'invention, une transmission d'information, sous forme de données numériques entre une unité émettrice 6 et une ou éventuellement plusieurs unité(s) réceptrice(s) déterminée(s) 7, est réalisée au travers du réseau de télécommunications 1 selon un procédé permettant d'obtenir simultanément une grande sûreté et une grande sécurité de transmission.

La sûreté, en matière de transmission d'information par une unité émettrice 6 affectée à un équipement du système 2, est obtenue par mise en oeuvre d'un code de détection d'erreur qui est appliqué aux données numériques d'information destinées à être transmises par cette unité émettrice.

Le code d'erreur choisi est systématiquement appliqué aux données numériques x correspondant à une information à transmettre afin d'obtenir un ensemble de données numériques y, qui peut être défini par l'équation $y = u(x, t)$

dans lequel u est la fonction de codage et dans lequel le terme t est une variable de temps dont la variation permet une datation et par conséquent une détection des erreurs liées au temps dans les transmissions d'information

Une unité réceptrice 7 qui reçoit des données d'information accompagnées de données de code d'erreur et qui connaît le code détecteur d'erreur mis en oeuvre à l'émission, est alors à même de vérifier, de manière connue en soi, que les données d'information reçues correspondent fidèlement ou non aux données d'information ayant été utilisées pour l'émission, en prenant en compte les données de code de détection d'erreur accompagnantes La mise en oeuvre d'un code détecteur d'erreur qui comporte un paramètre permettant de tenir compte de l'écoulement du temps, peut notamment permettre à une unité réceptrice de détecter qu'une information reçue ne correspond pas temporellement à ce qu'elle devrait être, par exemple par ce qu'elle est codée avec un code détecteur d'erreur antérieur à celui alors en vigueur

La sécurité en matière de transmission d'information par une des unités émettrices 6 est obtenue par mise en oeuvre d'un procédé de chiffrement ayant pour objectifs d'assurer l'authentification des unités concernées lors d'une transmission d'information entre une unité émettrice déterminée et une ou des unité(s) réceptrice(s) déterminées, ainsi que la protection des informations transmises, notamment en ce qui concerne leur intégrité.

L'authentification d'une information est ici prévue pour être obtenue par mise en oeuvre soit d'un processus à ticket, soit d'un chiffrement à clé.

Dans le cas d'un processus à ticket, la structure d'une information transmise est susceptible d'être définie par l'équation.

$$C= [u(x, t), T_t]$$

où $u(x, t)$ est la redondance de l'information et où $T_t$ est un ticket dont la valeur varie en fonction du temps. Ceci permet donc de détecter une éventuelle ré-émission d'une information ancienne, puisque dans ce cas cette information dispose d'un ticket périmé Toutefois un tel arrangement n'est pas pleinement sécuritaire dans la mesure où les paramètres $u(x, t)$ et $T_t$ peuvent être dissociés l'un de l'autre.

En effet, cette dissociation peut éventuellement être exploitée pour recréer de manière illicite une nouvelle information susceptible d'être considérée comme valide par une unité réceptrice, si un paramètre $T_t$ approprié est associé à un paramètre $u(x, t)$ dont le paramètre $T_t$ initial a été supprimé.

Pour éliminer ce risque, selon une première variante de réalisation, il est prévu de rendre la fonction u dépendante de la valeur du ticket, ce qui est équivalent à une exploitation du ticket comme clé de chiffrement de u. L'information transmise par une unité est alors définissable sous la forme $u_T(x, t)$ où $u_T$ est la fonction de codage dépendant de la clé négociée. Le code de détection d'erreur destiné à être exploité pour une transmission d'information diffère alors à chaque session de communication intervenant entre des unités.

La structure d'une information transmise est alors définissable par l'équation

$$C = T [u(x, t), K_t]$$

où $u(x, t)$ est la redondance de l'information et où $K_t$ est la clé qui est assumée varier en fonction du temps et qui permet en conséquence une détection des éventuelles ré-émissions illicites d'information.

La fonction T transforme l'information de manière que $u(x, t)$ ne soit plus clairement identifiable dans l'ensemble de données défini à partir d'une information par application de l'équation C.

Il peut aussi être prévu, selon une seconde variante de réalisation, d'exploiter un code de détection d'erreur choisi en application d'une loi de variation en fonction du temps qui est par exemple préalablement connue des unités susceptibles d'être concernées ou encore sélectivement négociée entre ces unités au cours d'une phase de négociation préalable Un code de détection d'erreur est par exemple choisi à chaque nouvelle session de communication impliquant une transmission par une unité déterminée de manière que les codes exploités par cette unité diffèrent systématiquement d'une session à l'autre et que préférablement il ne soit pas possible de prévoir l'utilisation d'un code déterminé pour une nouvelle session de communication entre unités par connaissance des codes précédemment exploités.

Il doit être compris qu'une session de communication telle qu'envisagée ci-dessus qui peut éventuellement se réduire à une transmission d'une information unique à partir d'une unité émettrice, peut avoir d'autres formes et peut notamment impliquer un échange d'informations entre des unités déterminées, par exemple entre deux mobiles en déplacement l'un derrière l'autre sur une même portion de voie ferroviaire ou de types déterminées par exemple un unité de type mobile et une unité constituée par une station fixe.

Il doit être également compris que la connaissance d'une loi de variation de code de détection peut être commune soit à des unités bien déterminées, soit encore à des types déterminés d'unités comme évoqués ci-dessus

**Revendications**

1. Procédé pour l'établissement d'une communication sécurisée entre des unités de communication déterminées par l'intermédiaire d'un canal d'un réseau de télécommunications, consistant à soumettre les données d'une information à transmettre, sélectivement, à partir d'une unité émettrice vers une ou plusieurs unités réceptrices déterminées, à un codage, avant émission, à l'aide d'un code de détection d'erreur, **caractérisé en ce qu'**il prévoit de sélectionner le code de détection d'erreur exploité pour une transmission d'information en application d'une loi de variation en fonction du temps.

2. Procédé selon la revendication 1, dans lequel il est prévu un changement de code de détection d'erreur à chaque nouvelle session de communication impliquant une transmission d'information à partir d'une unité émettrice déterminée.

3. Procédé selon l'une des revendications ou 2, dans lequel le choix de code de correction d'erreur est réalisé dans le cadre d'une négociation entre une unité émettrice et une ou plusieurs unités réceptrices concernées.

## Patentansprüche

1. Verfahren zur Herstellung einer sicheren Kommunikation zwischen bestimmten Kommunikationseinheiten über einen Kanal eines Telekommunikationsnetzwerks, darin bestehend, dass die Daten einer selektiv von einer Sendeeinheit zu einer oder mehreren bestimmten Empfangseinheiten zu übermittelnden Information vor dem Senden einer Codierung mit Hilfe eines Fehlererkennungscodes unterzogen werden, **dadurch gekennzeichnet, dass** es vorsieht, den für eine Informationsübermittlung genutzten Fehlererkennungscode in Anwendung eines zeitabhängigen Variationsgesetzes zu wählen.

2. Verfahren nach Anspruch 1, bei dem ein Wechsel des Fehlererkennungscodes bei jeder neuen Kommunikationssitzung vorgesehen ist, welche eine Informationsübermittlung ausgehend von einer bestimmten Sendeeinheit umfasst.

3. Verfahren nach einem der Ansprüche 1 oder 2, bei dem die Wahl des Fehlerkorrekturcodes im Rahmen eines Negotiatings zwischen einer Sendeeinheit und einer oder mehreren betroffenen Empfangseinheit(en) durchgeführt wird.

## Claims

1. Method for setting up secure communication between particular communication units via a channel of a telecommunication network, the method consisting in coding information data to be transmitted selectively from a sender unit to one or more particular receiver units prior to transmission using an error detection code, which method is **characterized in that** the error detection code used for transmitting information is selected by application of a law of variation as a function of time.

2. Method according to claim 1, wherein the error detection code is changed for each new communication session involving transmission of information from a particular sender unit.

3. Method according to claim 1 or claim 2, wherein the error correction code is selected in the context of negotiation between a sender unit concerned and one or more receiver units concerned.

# FIGURE UNIQUE

EP 0 929 169 B1